# EUROPÄISCHE PATENTSCHRIFT

(11) **EP 0 912 842 B1**
(45) Veröffentlichungstag und Bekanntmachung des Hinweises auf die Patenterteilung: **10.05.2000**
(21) Anmeldenummer: 97933677.3
(22) Anmeldetag: 14.07.1997
(51) Int. Cl.: F16H 37/08, F16H 15/38

(54) **REIBRADGETRIEBE**
TOROIDAL DRIVE
BOITE DE VITESSES TOROIDALE

(30) Priorität: 19.07.1996 DE 19629213
(43) Veröffentlichungstag der Anmeldung: 06.05.1999
(73) Patentinhaber: ZF FRIEDRICHSHAFEN Aktiengesellschaft, 88038 Friedrichshafen (DE)
(72) Erfinder: BART, Hans-Jörg, D-88085 Langenargen (DE); SAIBOLD, Friedrich, D-88045 Friedrichshafen (DE)
(86) Internationale Anmeldenummer: EP9703755
(87) Internationale Veröffentlichungsnummer: WO9803806

(56) Entgegenhaltungen:
- WO-A-92/03671
- WO-A-94/16244
- WO-A-95/14183
- GB-A- 2 200 175
- US-A- 3 828 618
- US-A- 4 693 134
- US-A- 5 453 061

## Beschreibung

Die Erfindung bezieht sich auf ein Getriebe mit einem ersten und einem zweiten Leistungsbereich, bei dem die Antriebsleistung von einer Antriebswelle über ein stufenlos verstellbares Toroid-Getriebe mit paarweise zusammenwirkenden, toroidförmigen Laufflächen, zwischen denen Rollkörper laufen, sowie ein Summierungsgetriebe auf eine Abtriebswelle übertragen wird.

Stufenlos verstellbare Getriebe mit einer An- und Abtriebswelle und einem Variator, bestehend aus zumindest zwei Torusscheiben mit toroidförmigen Laufflächen, zwischen denen Rollkörper abrollen, sind der Literatur in vielfachen Ausgestaltungen als bekannt zu entnehmen.

Die DE-A 28 07 971 zeigt ein einfach aufgebautes Reibradgetriebe mit einer An- und Abtriebswelle und zwei Scheiben, die zwischen sich Rollkörper aufnehmen. Die Rollkörper sind in Lagerungen gehaltert und können über eine axial verschiebbare Trommel verschwenkt werden. Auf diese Weise wird das Übersetzungsverhältnis verändert.

Aus der niederländischen Offenlegungsschrift 65 15 563 ist ein Reibrollengetriebe mit zwei schwenkbaren Reibrollensätzen zwischen zwei Antriebsscheiben bekannt, dessen mittiger Abtriebsscheibe ein Planetengetriebe mit mehreren Sonnenrädern nachgeordnet ist. Eines ist drehfest mit den Antriebsscheiben, ein anderes drehfest mit der Abtriebswelle des Gesamtgetriebes und ein drittes mit einer Bremse verbunden, während der Steg des Planetengetriebes an die Abtriebsscheibe angeschlossen ist. Durch eine umschaltbare Klauenkupplung ist das Planetengetriebe in einer ersten Betriebsweise als summierendes Getriebe zwischen An- und Abtriebsscheiben oder in der zweiten Betriebsweise als Übertragung zwischen Abtriebsscheibe und Abtriebswelle einsetzbar, wenn zu letzterem das Sonnenrad gebremst wird.

Beispiele für stufenlos verstellbare Getriebe mit zwei Leistungsbereichen bzw. Betriebsweisen sind den europäischen Patentschriften 0 043 184 und 0 078 124 als bekannt zu entnehmen.

In einer dieser Betriebsweisen wird die Antriebsleistung über das CVT auf die Abtriebswelle übertragen, während in der anderen Betriebsweise die Antriebsleistung sowohl über das CVT als auch über einen weiteren Leistungszweig fließt, in einem Summierungsgetriebe summiert und auf die Abtriebswelle gebracht wird. Diese Beispiele zeigen ferner, daß die Antriebswelle konzentrisch zum CVT liegen (EP-A 0 043 184) oder mit seitlichem Versatz zur Antriebswelle auf einer Nebenwelle angeordnet sein kann (EP-A 0 078 124).

Ebenso ist es bekannt, beim Wechsel von einer auf die andere Betriebsweise ein synchrones Übersetzungsverhältnis einzuhalten, um - ohne zusätzliche Verstellung des CVT - "synchron" umschalten zu können.

Um den baulichen Aufwand für die erforderlichen Übersetzungsstufen bzw. die Anbindung des Summierungsgetriebes zu senken, wurden weitere Vorschläge gemacht. Ein Beispiel hierfür ist die Anordnung nach der EP-A 0 149 892.

Aus der EP-A 0 502 061 ist schließlich eine Bauweise bekanntgeworden, bei der das stufenlose Getriebe konzentrisch zur Motorwelle liegt und direkt über die äußeren Torusscheiben angetrieben wird. Die durchgehende Antriebswelle trägt ein Sonnenrad eines Planetengetriebes, dessen Hohlrad festgebremst werden kann. Der Steg des Planetengetriebes ist Bestandteil einer kurzen Zwischenwelle, die an ihrem abtriebsseitigen Ende den Steg eines Summierungsgetriebes (Planetengetriebe) trägt. Das Hohlrad dieses Summierungsgetriebes ist mit der Abtriebswelle des Getriebes fest verbunden. Über eine schaltbare Kupplung kann das Hohlrad bzw. die Abtriebswelle direkt mit dem dritten Glied des Planetengetriebes, dem Sonnenrad, verbunden werden. Das Sonnenrad wird von einer Übersetzungsstufe angetrieben, deren Antriebsrad drehfest mit einer Vorgelegewelle verbunden ist. Über einen Kettentrieb treibt die innere Torusscheibe die Vorgelegewelle an. Bei geschlossener Bremse und geöffneter Kupplung befindet sich das Getriebe in der ersten Betriebsweise (LOW) mit Leistungsverzweigung. Im anschließenden oberen Bereich (zweite Betriebsweise, HIGH) ist die Bremse geöffnet und die Kupplung geschlossen, so daß die Antriebsleistung über die innere Torusscheibe und den Kettentrieb über die Vorgelegewelle auf die Übersetzungsstufe und im direkten Durchtrieb auf die Abtriebswelle übertragen wird.

Weiterer relevanter Stand der Technik ist der WO-A- 9 108 406 sowie der WO-A 9 514 183 zu entnehmen. Beide Schriften betreffen stufenlos verstellbare Getriebe mit einem Variator, bestehend aus mindestens zwei Torusscheiben mit toroidförmigen laufflächen zwischen denen Rollkörper laufen, und einem Planetegetriebe. Während die WO-A 9 108 406 ein direkt mit der Eingangswelle gekoppeltes Toroidgetriebe zeigt, ist der WO-A-9 514 183 eine Anordnung entnehmbar, bei der das Toroidgetriebe über ein Vorgelegegetriebe mit der Eingangswelle gekoppelt ist und bei der wenigstens zwei Kupplungen zu betätigen sind, um einen Leistungsbereich zu schalten.

Der vorliegenden Erfindung liegt die Aufgabe zugrunde, ein Getriebe der eingangs genannten Art hinsichtlich der Übersetzungsverhältnisse (Drehzahlen), der Belastung des stufenlos verstellbaren Getriebes und der Vorgelegewelle zu optimieren, so daß das Getriebe bei gleichem Grundaufbau eine einfache Kopplung der Elemente ermöglicht und an unterschiedliche Einsatzfälle angepaßt werden kann.

Diese Aufgabe wird mit einem, sämtliche Merkmale des Hauptanspruches aufweisenden, gattungsgemäßen Getriebe gelöst. Hierbei wird die Antriebsleistung in dem ersten Leistungsbereich von einer Antriebswelle über eine Vorgelegewelle auf ein stufenlos verstellbares Toroidgetriebe mit paarweise zusammenwirkenden, toroidförmigen Laufflächen, zwischen denen Rollkörper laufen, und über die Vorgelegewelle sowie ein Summierungsgetriebe auf eine Abtriebswelle übertragen. In dem zweiten Leistungsbereich dagegen wird die Antriebsleistung über das stufenlose Toroid-Getriebe direkt auf die Abtriebswelle übertragen. Zur Schaltung des ersten und zweiten Leistungsbereichs ist jeweils eine schaltbare Kupplung vorgesehen. Ferner steht die Vorgelegewelle über eine Übersetzungsstufe mit der Antriebswelle in ständiger Antriebsverbindung. Über eine weitere Übersetzungsstufe steht die Vorgelegewelle in ständiger Antriebsverbindung mit dem stufenlos verstellbaren Toroid-Getriebe, wobei diese weitere Übersetzungsstufe zwischen den beiden innenliegenden Torusscheiben des Toroid-Getriebes liegt. Diese beiden Übersetzungsstufen bieten erste Möglichkeiten zur Optimierung der Drehzahlverhältnisse innerhalb des stufenlos verstellbaren Getriebes, wobei vorteilhafterweise eine einfache Kopplung der Elemente realisiert ist.

Über die schaltbare Kupplung der Vorgelegewelle kann die Übersetzungsstufe zugeschaltet werden, die mit einem Getriebeglied des Summierungsgetriebes verbunden ist. Die mit dem Getriebeglied des Summierungsgetriebes verbundene Übersetzungsstufe bietet zusätzliche Möglichkeiten, die Drehzahlen innerhalb des Getriebes zu variieren (Anspruch 2).

Weitere vorteilhafte bauliche Ausgestaltungen sind den Ansprüchen 3 bis 19 zu entnehmen. Vorzugsweise eignet sich das erfindungsgemäße Getriebe für den Einsatz in Fahrzeugen mit einem Triebstrang, bei dem der Motor, das Getriebe und der Abtrieb in einer Linie angeordnet sind, insbesondere für Pkw mit Heckantrieb und begrenztem, radialen Platz-Tunneleinbau.

Bei einer besonders vorteilhaften Ausgestaltung des Getriebes ist eine weitere Übersetzungsstufe zwischen dem stufenlos verstellbaren Getriebe und dem Summierungsgetriebe eingeschaltet. Diese Übersetzungsstufe kann entweder aus einem Planetengetriebe oder aus Zahnrädern in Vorgelegewellenanordnung gebildet sein. Durch die Kombination der insgesamt dann zur Verfügung stehenden Übersetzungsstufen ist es möglich, die Drehzahlen des stufenlos verstellbaren Getriebes und der Vorgelegewelle so zu optimieren, daß das stufenlos verstellbare Getriebe in seinem oberen Drehzahlbereich arbeitet. Bei gleicher Leistung wird dieser Getriebeteil mit einem geringeren Drehmoment belastet. Es liegt auf der Hand, daß die Möglichkeit einer Optimierung der Drehzahlen dann eingeschränkt wird, wenn diese Übersetzungsstufe entfällt. Anstelle von vier Übersetzungsstufen stehen dann nur drei zur Verfügung, was bedeutet, daß durch den Blockbetrieb des Summierungsgetriebes in der Betriebsweise HIGH die Übersetzungen und somit die Drehzahlen des CVT dadurch vorgegeben sind, daß Motor und Abtrieb in vorgegebenen Drehzahlbereichen laufen müssen.

Weitere, für die Erfindung wesentliche Merkmale sowie die daraus resultierenden Vorteile sind der nachfolgenden Erläuterung eines bevorzugten Ausführungsbeispiels des erfindungsgemäßen Getriebes zu entnehmen.
Es zeigen:
- Fig. 1: ein Schema eines Getriebes, das in zwei Leistungsbereichen betrieben werden kann;
- Fig. 2: die symbolische Darstellung des Getriebes nach Fig. 1 und
- Fig. 3: ein Drehzahl-Diagramm.

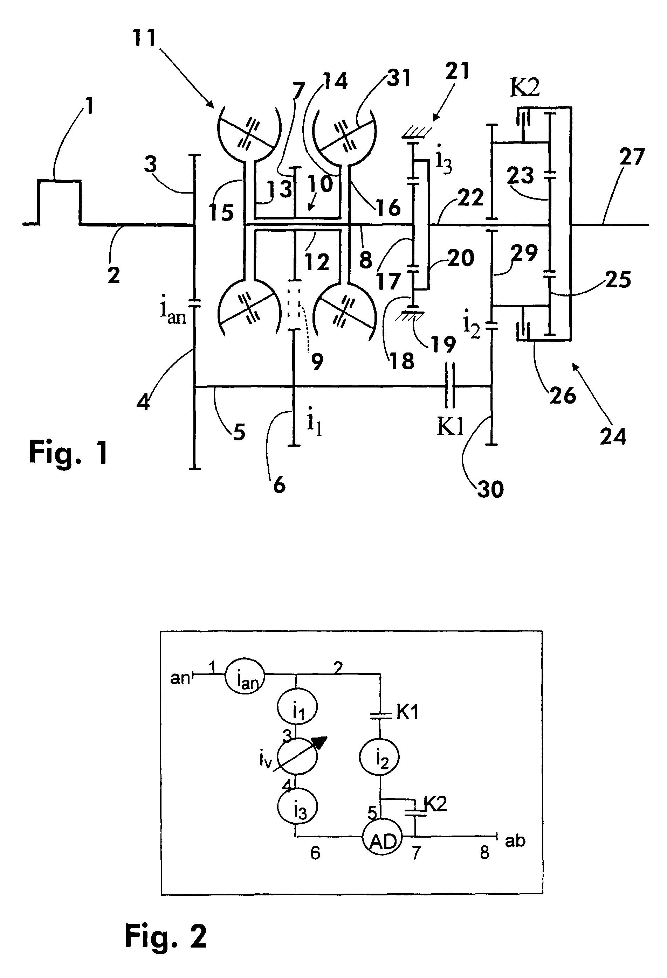

Ein in Fig. 1 angedeuteter Motor 1 treibt eine Antriebswelle 2, die an ihrem freien - in der Zeichnung rechts liegenden Ende - ein Zahnrad 3 trägt. Das Zahnrad 3 steht mit einem Zahnrad 4 im Eingriff. Das Zahnrad 4 ist drehfest auf einer Vorgelegewelle 5 angeordnet.

Die Zahnräder 3 und 4 bilden eine erste Übersetzungsstufe mit einer Übersetzung i_an.

Mit der Vorgelegewelle 5 ist ein weiteres Rad 6 drehfest verbunden, das mit einem Rad 7 in treibender Verbindung steht. Das Rad 7 ist in bezug auf eine Zwischenwelle 8 drehbar angeordnet. Wie in der Zeichnung angedeutet, sind die Räder 6 und 7 Kettenräder, die über eine Antriebskette 9 miteinander verbunden sind. Anstelle eines Kettentriebs wird der Fachmann gegebenenfalls einen Umschlingungstrieb anderer Bauart oder ein Zwischenzahnrad verwenden. Es sollte dabei sichergestellt werden, daß Welle 6 und 12 die gleiche Drehrichtung haben.

Das Rad 7 ist drehfest mit einem Eingangsglied 10 eines stufenlosen Getriebes 11 verbunden. Dieses Eingangsglied 10 setzt sich, wie aus der Zeichnung ersichtlich, aus einer kurz bauenden Hohlwelle 12 und zwei inneren Torusscheiben 13 und 14 mit zwei Laufflächen zusammen. Das Rad 7 und das Eingangsglied 10 können ein gemeinsames Bauteil bilden. Die innenliegenden Torusscheiben 13 und 14 wirken paarweise mit äußeren Torusscheiben 15 und 16 zusammen, die drehfest mit der Zwischenwelle 8 verbunden sind.

Zwischen den schematisch gezeichneten, toroidförmigen Laufflächen laufen Rollkörper 31.

Am freien Ende der Zwischenwelle 8 ist ein Sonnenrad 17 drehfest angeordnet. Das Sonnenrad 17 steht in ständigem Zahneingriff mit Planetenrädern 18, die ferner in ein ortsfest angeordnetes Hohlrad 19 eingreifen. Durch einen Steg 20 wird ein Planetengetriebe 21 vervollständigt, das eine weitere Übersetzungsstufe i_3 bildet.

Anstelle des Planetengetriebes kann die Übersetzungsstufe in Vorgelegebauweise ausgebildet sein.

Der Steg 20 des Planetengetriebes ist drehfest mit einer weiteren Zwischenwelle 22 verbunden, die an ihrem freien - in der Zeichnung rechts liegenden Ende - ein weiteres Sonnenrad 23 trägt. Dieses Sonnenrad 23 ist ein Getriebeglied eines Summierungsgetriebes 24. Das Sonnenrad 23 kämmt mit Planetenrädern 25. Das als Planetengetriebe ausgebildete Summierungsgetriebe 24 wird durch ein Hohlrad 26 vervollständigt, an das eine Abtriebswelle 27 des Getriebes angeschlossen ist. Ein Steg 28 ist, wie aus der Zeichnung ersichtlich, einerseits über eine schaltbare Kupplung K2 mit der Abtriebswelle 27 verbindbar und ist andererseits drehfest an ein Rad 29 angeschlossen.

Das Rad 29 ist drehbar auf der Zwischenwelle 22 gelagert und steht in ständigem Zahneingriff mit einem Rad 30, das drehfest auf der Vorgelegewelle 5 befestigt ist. Die Räder 29 und 30 bilden eine Übersetzungsstufe mit einer Übersetzung i_2.

Zwischen dem Rad 6 und dem Rad 30 der Vorgelegewelle 5 ist eine schaltbare Kupplung K1 eingeschaltet.

Der in Fig. 1 anhand des Schemas erläuterte Getriebeaufbau ist in Fig. 2 in einer symbolischen Darstellung zusätzlich wiedergegeben. Diese Darstellung ist dem Fachmann geläufig, so daß sich eine nähere Beschreibung erübrigt. Aus dieser symbolischen Darstellung ist ergänzend die Übersetzung i_V des stufenlos verstellbaren Getriebes 11 zu entnehmen.

Das erläuterte Getriebe erlaubt einen Betrieb in zwei Leistungsbereichen:
1. Unterer Bereich (LOW) mit Leistungsverzweigung:
   Die Antriebsleistung wird von der Antriebswelle 2 über die Übersetzungsstufe (Räder 3 und 4) mit der Übersetzung i_an auf die Vorgelegewelle 5 geleitet. Von hier aus wird das stufenlos verstellbare Getriebe 11 angetrieben. Die Leistung fließt über das Summierungsgetriebe 24 auf die Abtriebswelle 27. Die schaltbare Kupplung K2 ist geöffnet.
   Über einen weiteren Leistungszweig wird die Antriebsleistung über die Vorgelegewelle 5, die Kupplung K1, die geschlossen ist, über die Übersetzungsstufe (Räder 29 und 30) in das Summierungsgetriebe 24 geleitet. Die aufsummierte Leistung wird an die Abtriebswelle 27 weitergeleitet.
2. Oberer Bereich (HIGH) mit dem Summierungsgetriebe im Blockbetrieb:
   Die Antriebsleistung wird von der Antriebswelle 2 über die erste Übersetzungsstufe mit der Übersetzung i_an auf die Vorgelegewelle gebracht. Von hier aus wird das stufenlos verstellbare Getriebe 11 angetrieben. Die Kupplung K1 ist geöffnet, so daß über die Vorgelegewelle 5 kein Leistungsanteil in das Summierungsgetriebe 24 eingeleitet wird. Die Antriebsleistung wird über die geschlossene Kupplung K2 auf die Abtriebswelle 27 gebracht, wobei das Summierungsgetriebe 24 als Block umläuft.

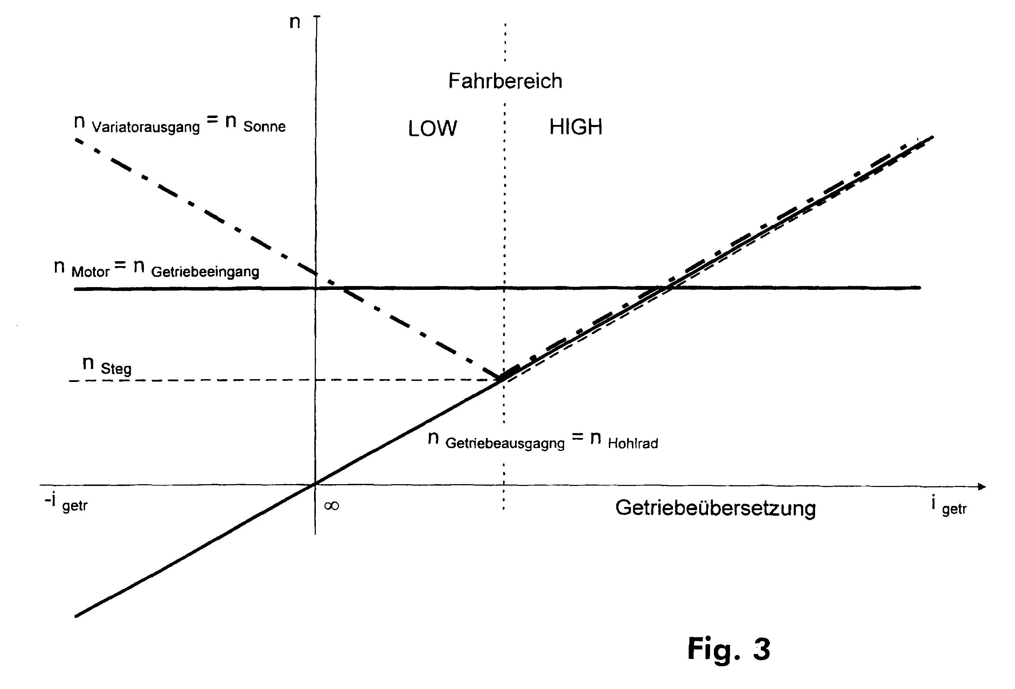

Die Fig. 3 zeigt ein Drehzahl-Diagramm, das die Drehzahlverhältnisse zwischen den einzelnen Getriebegliedern und in bezug auf die Getriebeübersetzung wiedergibt. Im ersten Fahrbereich (LOW) fährt das Fahrzeug, ohne daß ein zusätzlicher Rückwärtsgang erforderlich wäre, rückwärts. Die Drehzahl an der Abtriebswelle 27 verläuft über den Wert Null in Vorwärtsfahrtrichtung und läuft dann in den oberen Bereich (HIGH) mit dem Summierungsgetriebe 24 im Blockbetrieb. Ersichtlich ist, daß das stufenlos verstellbare Getriebe vorwiegend in seinem oberen Drehzahlbereich arbeitet.

Die als Planetengetriebe ausgebildete Übersetzungsstufe mit der Übersetzung i_3, die die Zwischenwellen 8 und 22 miteinander verbindet, kann gegebenenfalls entfallen. In diesem Fall würde das Sonnenrad 17 an die Stelle des Sonnenrades 23 des Summierungsgetriebes 24 treten. Obwohl diese Alternative prinzipiell möglich ist, bedeutet sie doch eine Einschränkung der Möglichkeiten zur Optimierung der Drehzahlverhältnisse innerhalb des Getriebes.

Obwohl dies nicht gesondert erwähnt ist, können die miteinander im Eingriff stehenden Zahnräder gerad- oder schrägverzahnt sein. Der Fachmann wird insbesondere bei hohen Drehzahlen Schrägverzahnungen vorziehen, um Einfluß auf die Geräuschentwicklung zu nehmen.

### Bezugszeichen

- 1: Motor
- 2: Antriebswelle
- 3: Zahnrad
- 4: Zahnrad
- 5: Vorgelegewelle
- 6: Rad
- 7: Rad
- 8: Zwischenwelle
- 9: Antriebskette
- 10: Eingangsglied
- 11: stufenloses Getriebe
- 12: Hohlwelle
- 13: Torusscheibe
- 14: Torusscheibe
- 15: Torusscheibe
- 16: Torusscheibe
- 17: Sonnenrad
- 18: Planetenrad
- 19: Hohlrad
- 20: Steg
- 21: Planetengetriebe
- 22: Zwischenwelle
- 23: Sonnenrad
- 24: Summierungsgetriebe
- 25: Planetenrad
- 26: Hohlrad
- 27: Abtriebswelle
- 28: Steg
- 29: Rad
- 30: Rad
- 31: Rollkörper
- K1: Kupplung
- K2: Kupplung

## Patentansprüche

1. Getriebe mit einem ersten und einem zweiten Leistungsbereich,
- bei dem die Antriebsleistung in dem ersten Leistungsbereich von einer Antriebswelle (2) über eine Vorgelegewelle (5) auf ein stufenlos verstellbares Toroid-Getriebe (11) mit paarweise zusammenwirkenden, toroidförmigen Laufflächen, zwischen denen Rollkörper laufen, und über die Vorgelegewelle (5) sowie ein Summierungsgetriebe (24) auf eine Abtriebswelle (27) übertragen wird,
- bei dem die Antriebsleistung in dem zweiten Leistungsbereich über das stufenlose Toroid-Getriebe (11) direkt auf die Abtriebswelle (27) übertragen wird,
- bei dem jeweils eine schaltbare Kupplung (K1, K2) zur Schaltung des ersten und zweiten Leistungsbereichs vorgesehen ist,
- bei dem die Vorgelegewelle (5) über eine Übersetzungsstufe (3, 4) mit der Antriebswelle (2) in ständiger Antriebsverbindung steht und
- bei dem die Vorgelegewelle (5) über eine weitere Übersetzungsstufe (6, 7, 9) in ständiger Antriebsverbindung mit dem stufenlos verstellbaren Toroid-Getriebe (11) steht, wobei die weitere Übersetzungsstufe zwischen den beiden innenliegenden Torusscheiben (13, 14) des Toroid-Getriebes liegt.

2. Getriebe nach Anspruch 1, dadurch **gekennzeichnet**, daß die Vorgelegewelle (5) über die schaltbare Kupplung (K1) mit einer Übersetzungsstufe (29, 30) verbindbar ist, wobei die Übersetzungsstufe (29, 30) mit einem Getriebeglied (28) des Summierungsgetriebes (24) verbunden ist.

3. Getriebe nach Anspruch 1, dadurch **gekennzeichnet**, daß die weitere Übersetzungsstufe für den Antrieb des stufenlos verstellbaren Getriebes (11) aus einem auf der Vorgelegewelle (5) drehfest angeordneten Rad (6) und einem auf einer Zwischenwelle (8) drehbar gelagerten Rad (7) besteht.

4. Getriebe nach Anspruch 3, dadurch **gekennzeichnet**, daß das Rad (7) drehfest mit einem Eingangsglied (10) mit zwei Laufflächen des stufenlosen Getriebes (11) verbunden ist.

5. Getriebe nach den Ansprüchen 3 und 4, dadurch **gekennzeichnet**, daß das Rad (7) und das Eingangsglied (10) ein gemeinsames Bauteil bilden.

6. Getriebe nach den Ansprüchen 3 und 4, dadurch **gekennzeichnet**, daß das Eingangsglied (10) aus zwei Torusscheiben (13, 14), die jeweils eine der Laufflächen aufweisen, und einer die Torusscheiben miteinander verbindenden Hohlwelle (12) gebildet wird.

7. Getriebe nach den Ansprüchen 3 und 6, dadurch **gekennzeichnet**, daß das Rad (7) - zwischen den Torusscheiben (13, 14) liegend - drehfest mit der Hohlwelle (12) verbunden ist.

8. Getriebe nach den Ansprüchen 1, 3 und 4, dadurch **gekennzeichnet**, daß die paarweise mit den Laufflächen des Eingangsgliedes (10) zusammenwirkenden Laufflächen Bestandteil zweier Torusscheiben (15, 16) sind, die drehfest mit der Zwischenwelle (8) verbunden sind und die Ausgangsglieder des stufenlosen Getriebes (11) bilden.

9. Getriebe nach Anspruch 8, dadurch **gekennzeichnet**, daß die Zwischenwelle (8) an ihrem freien Ende mit einem Sonnenrad (17) drehfest verbunden ist.

10. Getriebe nach Anspruch 9, dadurch **gekennzeichnet**, daß das Sonnenrad (17) den Eingang einer Übersetzungsstufe in Form eines Planetengetriebes (21) bildet.

11. Getriebe nach den Ansprüchen 8 und 10, dadurch **gekennzeichnet**, daß die Zwischenwelle (8) an ihrem freien Ende mit einem Zahnrad drehfest verbunden ist, das den Eingang einer Übersetzungsstufe in Vorgelegebauweise bildet.

12. Getriebe nach Anspruch 9, dadurch **gekennzeichnet**, daß das Sonnenrad (17) ein Getriebeglied des Summierungsgetriebes (24) ist.

13. Getriebe nach Anspruch 10, dadurch **gekennzeichnet**, daß ein Steg (20) des Planetengetriebes (21) drehfest mit einer weiteren Zwischenwelle (22) verbunden ist, die an ihrem freien Ende ein weiteres Sonnenrad (23) trägt, das ein Getriebeglied des Summierungsgetriebes (24) ist.

14. Getriebe nach Anspruch 2, dadurch **gekennzeichnet**, daß das mit der Übersetzungsstufe (29, 30) verbundene Getriebeglied des Summierungsgetriebes (24) ein Steg (28) ist, der Planetenräder (25) trägt, die mit dem Sonnenrad (23) und einem Hohlrad (26) in ständigem Eingriff stehen.

15. Getriebe nach Anspruch 14, dadurch **gekennzeichnet**, daß das Hohlrad (26) des Summierungsgetriebes (24) mit der Abtriebswelle (27) drehfest verbunden ist.

16. Getriebe nach den Ansprüchen 1, 13 und 15, dadurch **gekennzeichnet**, daß die schaltbare Kupplung (K2) so angeordnet ist, daß das Summierungsgetriebe (24) als Block umläuft.

17. Getriebe nach den Ansprüchen 1, 2 oder 16, dadurch **gekennzeichnet**, daß bei geschlossener Kupplung (K1) der Vorgelegewelle (5) und geöffneter Kupplung (K2) des Summierungsgetriebes (24) der erste Leistungsbereich geschaltet ist und bei geöffneter Kupplung (K1) der Vorgelegewelle (5) und geschlossener Kupplung (K2) des Summierungsgetriebes (24) der zweite Leistungsbereich geschaltet ist.

18. Getriebe nach Anspruch 17, dadurch **gekennzeichnet**, daß das Summierungsgetriebe (24) im zweiten Leistungsbereich als Block umläuft.

19. Getriebe nach den Ansprüchen 1, 8 und 13, dadurch **gekennzeichnet**, daß die An-, Abtriebs- und Zwischenwellen (2, 8, 12, 22, 27) koaxial angeordnet sind.

## Claims

1. Transmission with a first and a second power range,
- in which the driving power in the first power range is transmitted from a drive shaft (2) via a countershaft (5) to a continuously variable toroidal transmission (11) with toroidal running faces which co-operate in pairs and between which rolling bodies run, and via the countershaft (5) and a summing transmission (24) to a driven shaft (27),
- in which the driving power in the second power range is transmitted via the continuously variable toroidal transmission (11) directly to the driven shaft (27),
- in which a respective clutch (K1, K2) is provided to connect the first and the second power range,
- in which the countershaft (5) is permanently connected in drive terms to the drive shaft (2) via a change-speed stage (3, 4), and
- in which the countershaft (5) is permanently connected in drive terms to the continuously variable toroidal transmission (11) via a further change-speed stage (6, 7, 9), wherein the further change-speed stage lies between the two inner toroidal discs (13, 14) of the toroidal transmission.

2. Transmission according to Claim 1, characterised in that the countershaft (5) can be connected via the clutch (K1) to a change-speed stage (29, 30), wherein the change-speed stage (29, 30) is connected to a transmission member (28) of the summing transmission (24).

3. Transmission according to claim 1, characterised in that the further change-speed stage for driving the continuously variable transmission (11) consists of a wheel (6), which is non-rotatably disposed on the countershaft (5), and a wheel (7), which is rotatably mounted on an intermediate shaft (8).

4. Transmission according to Claim 3, characterised in that the wheel (7) is non-rotatably connected to an input member (10) with two running faces of the continuously variable transmission (11).

5. Transmission according to Claims 3 and 4, characterised in that the wheel (7) and the input member (10) form a common component.

6. Transmission according to Claims 3 and 4, characterised in that the input member (10) is formed from two toroidal discs (13, 14), which each comprise one of the running faces, and a hollow shaft (12) connecting the toroidal discs together.

7. Transmission according to Claims 3 and 6, characterised in that the wheel (7) - lying between the toroidal discs (13, 14) - is non-rotatably connected to the hollow shaft (12).

8. Transmission according to Claims 1, 3 and 4, characterised in that the running faces co-operating in pairs with the running faces of the input member (10) constitute a component part of two toroidal discs (15, 16), which are non-rotatably connected to the intermediate shaft (8) and form the output members of the continuously variable transmission (11).

9. Transmission according to Claim 8, characterised in that the intermediate shaft (8) is non-rotatably connected at its free end to a sun wheel (17).

10. Transmission according to Claim 9, characterised in that the sun wheel (17) forms the input of a change-speed stage in the form of a planetary transmission (21).

11. Transmission according to Claims 8 and 10, characterised in that the intermediate shaft (8) is non-rotatably connected at its free end to a gearwheel which forms the input of a change-speed stage of countershaft construction.

12. Transmission according to Claim 9, characterised in that the sun wheel (17) is a transmission member of the summing transmission (24).

13. Transmission according to Claim 10, characterised in that an arm (20) of the planetary transmission (21) is non-rotatably connected to a further intermediate shaft (22) bearing at its free end a further sun wheel (23), which is a transmission member of the summing transmission (24).

14. Transmission according to Claim 2, characterised in that the transmission member of the summing transmission (24) which is connected to the change-speed stage (29, 30) is an arm (28) bearing planet wheels (25), which are permanently in mesh with the sun wheel (23) and an internal gear (26).

15. Transmission according to Claim 14, characterised in that the internal gear (26) of the summing transmission (24) is non-rotatably connected to the driven shaft (27).

16. Transmission according to Claims 1, 13 and 15, characterised in that the clutch (K2) is disposed such that the summing transmission (24) rotates as a unit.

17. Transmission according to Claim 1, 2 or 16, characterised in that the first power range is connected with the clutch (K1) of the countershaft (5) engaged and the clutch (K2) of the summing transmission (24) disengaged, and the second power range is connected with the clutch (K1) of the countershaft (5) disengaged and the clutch (K2) of the summing transmission (24) engaged.

18. Transmission according to Claim 17, characterised in that the summing transmission (24) rotates as a unit in the second power range.

19. Transmission according to Claims 1, 8 and 13, characterised in that the drive, driven and intermediate shafts (2, 8, 12, 22, 27) are disposed coaxially.

## Revendications

1. Boîte de vitesses ayant une première et une deuxième gamme de puissance,
- dans laquelle, dans la première gamme de puissance, la puissance motrice est transmise d'un arbre moteur (2), par l'intermédiaire d'un arbre de renvoi (5) à une transmission toroïdale (11) réglable par variation continue, comprenant des surfaces de roulement de forme toroïdale coopérant par paires, entre lesquelles roulent des corps roulants, et, par l'intermédiaire de l'arbre de renvoi (5) ainsi que d'un mécanisme additionneur (24), à un arbre récepteur (27),
- dans laquelle, dans la deuxième gamme de puissance, la puissance motrice est transmise directement à l'arbre récepteur (27), par l'intermédiaire de la transmission toroïdale à variation continue (11),
- dans laquelle il est prévu un embrayage commandé (K1, K2) pour l'enclenchement de chacune des première et deuxième gammes de puissance,
- dans laquelle l'arbre de renvoi (5) est en liaison d'entraînement constante avec l'arbre moteur (2) par l'intermédiaire d'un étage de transmission (3, 4), et
- dans laquelle l'arbre de renvoi (5) est en liaison d'entraînement constante avec la transmission toroïdale (11) réglable par variation continue par l'intermédiaire d'un étage de transmission supplémentaire (6, 7, 9), l'étage de transmission supplémentaire étant interposé entre les deux disques toroïdaux intérieurs (13, 14) de la transmission toroïdale.

2. Boîte de vitesses selon la revendication 1, **caractérisée** en ce que l'arbre de renvoi (5) peut être mis en liaison avec un étage de transmission (29, 30) par l'intermédiaire de l'embrayage commandé (K1), l'étage de transmission (29, 30) étant relié à un élément (28) du mécanisme additionneur (24).

3. Boîte de vitesses selon la revendication 1, **caractérisée** en ce que l'étage de transmission supplémentaire servant à l'entraînement de la transmission réglable par variation continue (11) est composé d'une roue (6), montée solidaire en rotation sur l'arbre de renvoi (5), et d'une roue (7), montée libre en rotation sur un arbre intermédiaire (8).

4. Boîte de vitesses selon la revendication 3, **caractérisée** en ce que la roue (7) est reliée solidairement en rotation à un organe d'entrée (10) qui possède deux surfaces de roulement de la transmission à variation continue (11).

5. Boîte de vitesses selon les revendications 3 et 4, **caractérisée** en ce que la roue (7) et l'organe d'entrée (10) forment un bloc commun.

6. Boîte de vitesses selon les revendications 3 et 4, **caractérisée** en ce que l'organe d'entrée (10) est formé de deux disques toroïdaux (13, 14), qui présentent chacun une des surfaces de roulement, et d'un arbre creux (12) qui relie les disques toroïdaux l'un à l'autre.

7. Boîte de vitesses selon les revendications 3 et 6, **caractérisée** en ce que la roue (7), située entre les disques toroïdaux (13, 14), est reliée solidairement en rotation à l'arbre creux (12).

8. Boîte de vitesses selon les revendications 1, 3 et 4, **caractérisée** en ce que les surfaces de roulement, qui coopèrent par paires avec les surfaces de roulement de l'organe d'entrée (10), font partie des deux disques toroïdaux (15, 16) qui sont reliés solidairement en rotation à l'arbre intermédiaire (8) et forment les éléments de sortie de la transmission à variation continue (11).

9. Boîte de vitesses selon la revendication 8, **caractérisée** en ce que, à son extrémité libre, l'arbre intermédiaire (8) est relié solidairement en rotation à une roue solaire (17).

10. Boîte de vitesses selon la revendication 9, **caractérisée** en ce que la roue solaire (17) forme l'entrée d'un étage de transmission réalisé sous la forme d'un engrenage planétaire (21).

11. Boîte de vitesses selon les revendications 8 et 10, **caractérisée** en ce que, à son extrémité libre, l'arbre intermédiaire (8) est relié solidairement en rotation à une roue dentée qui forme l'entrée d'un étage de transmission ayant la forme de construction d'un renvoi.

12. Boîte de vitesses selon la revendication 9, **caractérisée** en ce que la roue solaire (17) est un élément du mécanisme additionneur (24).

13. Boîte de vitesses selon la revendication 10, **caractérisée** en ce qu'un support (20) du mécanisme épicycloïdal (21) est relié solidairement en rotation à un autre arbre intermédiaire (22) qui porte à son extrémité libre une autre roue solaire (23) qui est un élément du mécanisme additionneur (24).

14. Boîte de vitesses selon la revendication 2, **caractérisée** en ce que l'élément du mécanisme additionneur (24), qui est relié à l'étage de transmission (29, 30), est un support (28) qui porte des roues planétaires (25) qui sont en prise constante avec la roue solaire (23) et avec une roue à denture intérieure (26).

15. Boîte de vitesses selon la revendication 14, **caractérisée** en ce que la roue à denture intérieure (26) du mécanisme additionneur (24) est reliée solidairement en rotation à l'arbre récepteur (27).

16. Boîte de vitesses selon les revendications 1, 13 et 15, **caractérisée** en ce que l'embrayage commandé (K2) est agencé de sorte que le mécanisme additionneur (24) tourne comme un seul bloc.

17. Boîte de vitesses selon les revendications 1, 2 ou 16, **caractérisée** en ce que, lorsque l'embrayage (K1) de l'arbre de renvoi (5) est en position fermée et l'embrayage (K2) du mécanisme additionneur (24) en position ouverte, la première gamme de puissance est enclenchée, tandis que, lorsque l'embrayage (K1) de l'arbre de renvoi (5) est en position ouverte et l'embrayage (K2) du mécanisme additionneur (24) en position fermée, la deuxième gamme de puissance est enclenchée.

18. Boîte de vitesses selon la revendication 17, **caractérisée** en ce que le mécanisme additionneur (24) tourne comme un seul bloc dans la deuxième gamme de puissance.

19. Boîte de vitesses selon les revendications 1,8 et 13, **caractérisée** en ce que les arbres moteurs, récepteur et intermédiaires (2, 8, 12, 22, 27) sont disposés coaxialement.
